# EUROPÄISCHE PATENTSCHRIFT

(11) **EP 2 303 652 B1**
(45) Veröffentlichungstag und Bekanntmachung des Hinweises auf die Patenterteilung: **03.09.2014**
(21) Anmeldenummer: 09765661.5
(22) Anmeldetag: 20.04.2009
(51) Int. Cl.: B60T 8/34, F16K 17/30

(54) **REGELVENTIL FÜR EIN FAHRZEUGBREMSSYSTEM UND FAHRZEUGBREMSSYSTEM MIT EINEM SOLCHEN REGELVENTIL**
CONTROL VALVE FOR A VEHICLE BRAKE SYSTEM AND VEHICLE BRAKE SYSTEM COMPRISING SUCH A CONTROL VALVE
SOUPAPE DE RÉGLAGE POUR UN SYSTÈME DE FREINAGE DE VÉHICULE ET SYSTÈME DE FREINAGE DE VÉHICULE AVEC UNE SOUPAPE DE CE TYPE

(30) Priorität: 19.06.2008 DE 102008002539
(43) Veröffentlichungstag der Anmeldung: 06.04.2011
(73) Patentinhaber: Robert Bosch GmbH, 70442 Stuttgart (DE)
(72) Erfinder: SCHEPP, Rene, 71336 Waiblingen (DE); ALAZE, Norbert, 71706 Markgroeningen (DE)
(86) Internationale Anmeldenummer: PCT/EP2009/054648
(87) Internationale Veröffentlichungsnummer: WO 2009/153081

(56) Entgegenhaltungen:
- EP-A- 0 606 840
- WO-A-93/19960
- WO-A-98/00323
- DE-A1- 4 202 388

## Beschreibung

### Stand der Technik

Die Erfindung geht aus von einem Regelventil für ein Fahrzeugbremssystem nach der Gattung des unabhängigen Patentanspruchs 1.

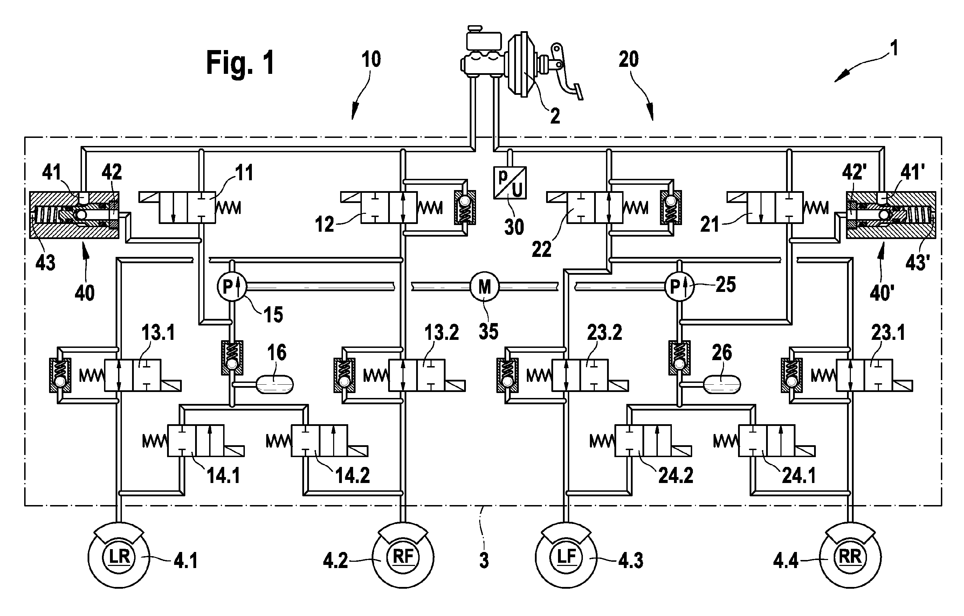

Aus dem Stand der Technik sind Fahrzeugbremssysteme bekannt, die verschiedene Sicherheitssysteme, wie beispielsweise ein Antiblockiersystem (ABS), ein elektronisches Stabilitätsprogramm (ESP) usw. umfassen, und verschiedene Sicherheitsfunktionen, wie beispielsweise eine Antiblockierfunktion, eine Antriebsschlupfregelung (ASR) usw. ausführen. Fig. 1 zeigt ein Fahrzeugbremssystem, mit welchem verschiedene Sicherheitsfunktionen ausgeführt werden können.

Wie aus Fig. 1 ersichtlich ist, umfasst ein herkömmliches Fahrzeugbremssystem 1 einen Hauptbremszylinder 2, eine strichpunktiert dargestellte Fluidsteuereinheit 3 und vier Radbremsen 4.1, bis 4.4, die jeweils einen zugehörigen nicht dargestellten Radbremszylinder aufweisen. Jeweils zwei der vier Radbremsen 4.1 bis 4.4 sind einem Bremskreis 10, 20 zugeordnet, wobei jeder Bremskreis 10, 20 mit dem Hauptbremszylinder 2 verbunden ist. So sind eine erste Radbremse 4.1, die beispielsweise an einer Fahrzeughinterachse an der linken Seite angeordnet ist, und eine zweite Radbremse 4.2, die beispielsweise an einer Fahrzeugvorderachse an der rechten Seite angeordnet ist, einem ersten Bremskreis 10 zugeordnet, und eine dritte Radbremse 4.3, die beispielsweise an der Fahrzeugvorderachse an der rechten Seite angeordnet ist, und eine vierte Radbremse 4.4, die beispielsweise an einer Fahrzeughinterachse an der linken Seite angeordnet ist, sind einem zweiten Bremskreis 20 zugeordnet. Jeder Radbremse 4.1 bis 4.4 ist ein Einlassventil 13.1, 13.2, 23.1, 23.2 und ein Auslassventil 14.1, 14.2, 24.1, 24.2 zugeordnet, wobei über die Einlassventile 13.1, 13.2, 23.1, 23.2 jeweils Druck in der korrespondierenden Radbremse 4.1, bis 4.4 aufgebaut werden kann, und wobei über die Auslassventile 14.1, 14.2, 24.1, 24.2 jeweils Druck in der korrespondierenden Radbremse 4.1, bis 4.4 abgebaut werden kann.

Wie aus Fig. 1 weiter ersichtlich ist, weist der erste Bremskreis 10 ein erstes Ansaugventil 11, ein erstes Umschaltventil 12, einen ersten Fluidspeicher 16 und eine erste Rückförderpumpe 15 auf. Der zweite Bremskreis 20 weist ein zweites Ansaugventil 21, ein zweites Umschaltventil 22, einen zweiten Fluidspeicher 26 und eine zweite Rückförderpumpe 25 auf, wobei die erste und zweite Rückförderpumpe 15, 25 im dargestellten Beispiel von einem gemeinsamen Elektromotor 35 angetrieben werden. Des Weiteren umfasst die Fluidsteuereinheit 3 zur Ermittlung des aktuellen Bremsdrucks eine Sensoreinheit 30. Die Fluidsteuereinheit 3 verwendet zur Bremsdruckmodulation im ersten Bremskreis 10 das erste Umschaltventil 12, das erste Ansaugventil 11 und die erste Rückförderpumpe 15 und zur Bremsdruckmodulation im zweiten Bremskreis 20 das zweite Umschaltventil 22, das zweite Ansaugventil 21 und die zweite Rückförderpumpe 25.

Die Rückförderpumpen 15, 25 der beiden Bremskreise 10, 20 können beispielsweise als Kolbenpumpen oder als Zahnradpumpen ausgeführt werden. Während einer ESP-Regelung kann sich durch die offengeschalteten Ansaugventile 11 bzw. 21 ein Bremsdruck von bis zu 140 bar einstellen, mit dem die Saugseite der korrespondierenden Rückförderpumpe 15, 25 belastet wird, wenn in das System eingebremst werden muss. Auch in einem teilaktiven Systemzustand kann die Rückförderpumpe 15, 25 saugseitig mit bis zu 140 bar beaufschlagt werden. Zudem kann es zu einem Vordruck auf der Saugseite der Rückförderpumpe 15, 25 kommen, wenn der Druck des Hauptbremszylinders 2 über die offenen Umschaltventile 12 bzw. 22 zu den Rückförderpumpen 15, 25 geleitet wird und dann bis zu dem für die Regelung notwendigen Raddruck über die entsprechende Rückförderpumpe 15 bzw. 25 verstärkt wird. Bei einer Ausführung der Rückförderpumpen 15, 25 als Kolbenpumpen kann dieser Hochdruck, der auf eine exzenterseitige Dichtung der Rückförderpumpe 15, 25 wirkt, zu einem sehr hohen Verschleiß, Extrusion und dadurch zu erhöhter Leckage führen. Wenn als Rückförderpumpe 15, 25 eine Zahnradpumpe verwendet wird, belastet dieser Hochdruck Weltendichtringe der Rückförderpumpen 15, 25, was zu einer erhöhten Reibung und ebenso wie bei der Kolbenpumpe zu einem erhöhten Verschleiß der Dichtungen führen kann, wobei hochdruckbeständige Wellendichtringe sehr teuer sind.

Wie aus Fig. 1 weiter ersichtlich ist, ist zur Begrenzung des wirksamen Drucks an der Saugseite der korrespondierenden Rückförderpumpe 15, 25, wie in einer nicht vorveröffentlichten Patentanmeldung der Anmelderin WO 2009/021778 A1 beschrieben ist, jeweils ein zusätzliches Regelventil 40, 40' in eine Saugleitung zwischen der entsprechenden Rückförderpumpe 15, 25 und dem Hauptbremszylinder 2 eingeschleift, so dass die entsprechende Rückförderpumpe 15, 25 saugseitig über das Regelventil 40, 40' oder das Ansaugventil 11, 21 mit dem Hauptbremszylinder 2 verbunden ist, d.h. das Regelventil 40, 40' ist zum Ansaugventil 11,21 parallel geschaltet und begrenzt den wirksamen Druck an der Saugseite der Rückförderpumpe 15 auf den vorgebbaren maximalen Druckwert.

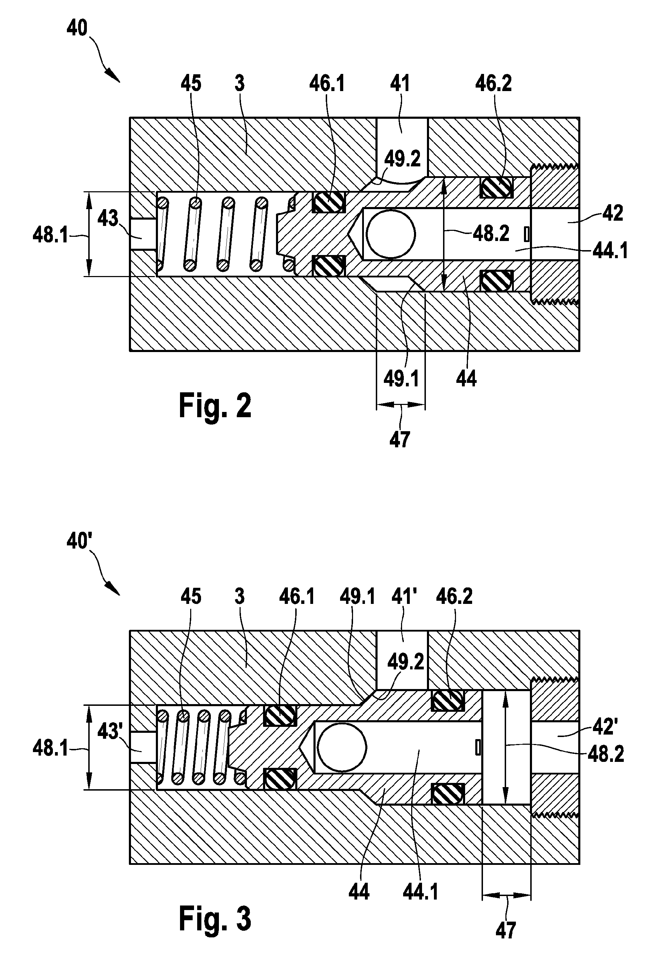

Wie aus Fig. 2 und. 3 ersichtlich ist, weist das Regelventil 40, 40' einen Hauptbremszylinderanschluss 41, 41', einen Pumpenanschluss 42, 42', einen druckentlasteten Anschluss 43, 43' zur Atmosphäre und einen längsbeweglichen Kolben 44 auf. Der längsbewegliche Kolben 44 ist als abgestufter Kolben 44 ausgeführt,, der zum druckentlasteten Anschluss 43, 43' einen ersten Durchmesser 48.1 aufweist und zum Pumpenanschluss 42, 42' einen zweiten Durchmesser 48.2 aufweist, wobei der zweite Durchmesser 48.2 größer als der erste Durchmesser 48.1 ausgeführt ist. Der Kolben 44 ist zum druckentlasteten Anschluss 43, 43' und zum Pumpenanschluss 42, 42' jeweils über einen Dichtring 46.1, 46.2 gegen das Gehäuse abgedichtet. Ein Übergang des Kolbens 44 vom ersten auf den zweiten Durchmesser 48.1, 48.2 ist als Dichtkegel 49.1 ausgeführt, der mit einem Dichtsitz 49.2 im Gehäuse korrespondiert. Der längsbewegliche Kolben 44 ist an der druckentlasteten Seite von einer Stellfeder 45 mit einer Federkraft beaufschlagt und verbleibt in einem drucklosen Zustand in einer Ausgangstellung, die in Fig. 2 dargestellt ist, in welcher eine über eine Kolbenbohrung 44.1 bestehende Fluidverbindung zwischen dem Hauptbremszylinderanschluss 41 und dem Pumpenanschluss 42 vollständig freigegeben ist. Während eines ABS-Eingriffs wird der Kolben 44 von Seiten des Hauptbremszylinderanschlusses 41 mit einem Druck beaufschlagt, der den Kolben 44 gegen die Federkraft der Stellfeder 45 in Richtung des druckentlasteten Anschlusses 43' bewegt. Bei Erreichen des maximalen Druckwerts und der korrespondierenden Anschlagstellung, die in Fig. 3 dargestellt ist, dichtet der Dichtkegel 49.1 des Kolbens 44 im Dichtsitz 49.2 des Gehäuses ab, und die Verbindung zwischen dem Hauptbremszylinderanschluss 41' und dem Pumpenanschluss 42' wird vom Kolben 44 vollständig unterbrochen. Dadurch wird der Zufluss vom Hauptbremszylinder 2 zur Rückförderpumpe 25 unterbunden und die Fluidsteuereinheit 3 kann in diesem Zustand eine ABS-Regelung ausführen.

Während eines teilaktiven Zustands des Bremssystems wird der Kolben 44 des Regelventils 40, 40' von Seiten des Hauptbremszylinderanschlusses 41, 41' mit einem Druck beaufschlagt, der den Kolben 44 gegen die Federkraft der Stellfeder 45 in Richtung des druckentlasteten Anschlusses 43, 43' bewegt, wobei die Fluidverbindung zwischen dem Hauptbremszylinderanschluss 41, 41' und dem Pumpenanschluss 42, 42' durch die Kolbenbewegung reduziert wird. Bei Erreichen des maximalen Druckwerts befindet sich der Kolben 44 in der korrespondierenden Anschlagstellung, die in Fig. 3 dargestellt ist, in welcher die Verbindung zwischen dem Hauptbremszylinderanschluss 41' und dem Pumpenanschluss 42' durch den Kolben 44 vollständig unterbrochen ist. Dadurch wird ein weiterer Druckaufbau zur Rückförderpumpe 25 unterbunden. Fällt der aktuelle Druck im Regelventil 40' unter den maximalen Druckwert ab, dann bewegt die Federkraft der Stellfeder 45 den Kolben 44 aus der Anschlagstellung in Richtung Ausgangsstellung, wodurch die Verbindung zwischen dem Hauptbremszylinderanschluss 41, 41' und dem Pumpenanschluss 42, 42' wieder freigegeben wird. Damit ist sichergestellt, dass sich der Druck in der Leitung zum Hauptbremszylinder 2 aufbauen kann, ohne den Druck in der Saugseite der Rückförderpumpe 15, 25 über den vorgegebenen maximalen Druckwert ansteigen zu lassen. In Fig. 3 bezeichnet das Bezugszeichen 47 den maximalen Hub des Kolbens 44. Während eines ESP-Eingriffs verbleibt der Kolben 44 des Regelventils 40 in der Ausgangstellung, wobei die Rückförderpumpe 15 in diesem Zustand über das Regelventil 40 und das Ansaugventil 11 parallel Fluid ansaugt.

Bei dem in der nicht vorveröffentlichten Patentanmeldung der Anmelderin WO 2009/021778 A1 beschriebenen Regelventil 40, 40' ist der Durchmesser 48.1 des Kolbens 44, der über den anstehenden Steuerdruck gegen die Rückstellfeder 45 in Schließrichtung bewegt wird, kleiner als der Durchmesser 48.2 des Dichtsitzes 49.1, der den Dichtkegel 49.2 aufnimmt. Daher sollte der Steuerdruck zur Betätigung des Regelventils 40, 40' relativ hoch sein, wobei die Reibung der Dichtelemente zu einer erhöhten Hysterese des Schließdrucks führen kann.

Die Dokumente DE 42 02 388 A1, EP 0 606 840 A1, WO 98/00323 A1 und WO 93/19960 offenbaren jeweils eine hydraulische Bremsanlage für Kraftfahrzeuge. Die offenbarte hydraulische Bremsanlage umfasst ein Regelventil mit einem ersten Fluidanschluss, einem zweiten Fluidanschluss und einem druckentlasteten Anschluss zur Atmosphäre. Des Weiteren ist ein längsbeweglicher Steuerkolben an der druckentlasteten Seite von einer Stellfeder mit einer Federkraft beaufschlagt und gibt in einer Ausgangstellung eine Fluidverbindung zwischen dem ersten Fluidanschluss und dem zweiten Fluidanschluss vollständig frei. Zudem sind ein Ventilkörper mit einem Dichtsitz und ein mit dem Steuerkolben gekoppeltes Dichtelement vorgesehen, wobei ein Dichtbereich des Dichtelements mit dem Dichtsitz des Ventilkörpers zusammenwirkt, um einen wirksamen Druck am zweiten Fluidanschluss auf einen vorgebbaren maximalen Druckwert zu begrenzen. Hierbei ist ein wirksamer Durchmesser des Steuerkolbens größer oder gleich als ein wirksamen Durchmesser des Dichtelements ausgeführt, wobei der Steuerkolben durch einen Stift mit dem Dichtelement gekoppelt ist. Der Steuerkolben und das Dichtelement sind auf verschiedenen Seiten des Ventilkörpers angeordnet, und der Stift ist durch eine Durchflussöffnung des Ventilkörpers geführt.

### Offenbarung der Erfindung

Das erfindungsgemäße Regelventil für ein Fahrzeugbremssystem mit den Merkmalen des unabhängigen Patentanspruchs 1 hat demgegenüber den Vorteil, dass es einen Ventilkörper mit einem Dichtsitz und ein mit einem Steuerkolben gekoppeltes Dichtelement aufweist. Ein Dichtbereich des Dichtelements wirkt mit dem Dichtsitz des Ventilkörpers zusammen, um einen wirksamen Druck an einem zweiten Fluidanschluss auf einen vorgebbaren maximalen Druckwert zu begrenzen, wobei ein wirksamer Durchmesser des Steuerkolbens größer oder gleich einem wirksamen Durchmesser des Dichtelements ausgeführt ist, um die Regelgüte des Regelventils zu verbessern bzw. einen erforderlichen Steuerdruck zur Betätigung des Regelventils zu verringern. Das erfindungsgemäße Regelventil weist einen ersten Fluidanschluss, einen zweiten Fluidanschluss und einen druckentlasteten Anschluss zur Atmosphäre auf, wobei der längsbewegliche Steuerkolben an der druckentlasteten Seite von einer Stellfeder mit einer Federkraft beaufschlagt ist und in einer Ausgangstellung eine Fluidverbindung zwischen dem ersten Fluidanschluss und dem zweiten Fluidanschluss vollständig freigibt. Das erfindungsgemäße Regelventil kann in dem Fahrzeugbremssystem in vorteilhafter Weise die Funktion eines Ansaugventils übernehmen und kann zusätzlich eine Rückführungspumpe vor erhöhtem Vordruck auf der Saugseite schützen.

Erfindungsgemäß ist der Steuerkolben durch einen Stift mit dem Dichtelement gekoppelt, wobei der Steuerkolben und das Dichtelement auf verschiedenen Seiten des Ventilkörpers angeordnet sind, und der Stift durch eine Durchflussöffnung des Ventilkörpers geführt. Das Dichtelement kann beispielsweise auf den Stift aufgesteckt werden und am hinteren Bereich über eine Dichtlippe am Stift abgedichtet sein.

Erfindungsgemäß weist das Dichtelement am vorderen Dichtbereich einen radialen Bewegungsspielraum zum Stift auf. Dadurch können erfindungsgemäß Fertigungstoleranzen ausgeglichen und ein sicheres Schließen des Ventils gewährleistet werden.

Durch die in den abhängigen Ansprüchen aufgeführten Maßnahmen und Weiterbildungen sind vorteilhafte Verbesserungen des im unabhängigen Patentanspruch 1 angegebenen Regelventils für ein Fahrzeugbremssystem möglich.

In weiterer Ausgestaltung des erfindungsgemäßen Regelventils ist der Stift an einem Ende mit dem Steuerkolben verbunden, welcher über eine erste Dichtung gegen eine erste Ventilwand abgedichtet ist, und weist am anderen Ende einen Bund auf, an welchem eine zweite Dichtung anliegt, welche über ein sich am Dichtelement abstützendes Federelement axial vorgespannt ist und den Stift gegen eine zweite Ventilwand abdichtet. Die Dichtung am Stift sollte möglichst reibungsarm sein, um eine zu große Hysterese zu vermeiden. Dies wird durch die axiale Vorspannung der zweiten Dichtung durch das Federelement erreicht. Damit kann in vorteilhafter Weise eine radiale Vorspannung der Dichtung vermieden werden, was zu einer Grundreibung im drucklosen Zustand führen könnte. Zudem kann die Dichtung beim Anliegen eines höheren Druckes druckunterstützt dichten.

In weiterer Ausgestaltung des erfindungsgemäßen Regelventils bewegt ein sich am ersten Fluidanschluss aufbauender Druck den Steuerkolben gegen die Federkraft der Stellfeder in Richtung des druckentlasteten Anschlusses, wobei die Fluidverbindung zwischen dem ersten Fluidanschluss und dem zweiten Fluidanschluss durch die Bewegung des mit dem Steuerkolben gekoppelten Dichtelements in vorteilhafter Weise reduziert werden kann. Die Fluidverbindung zwischen dem ersten Fluidanschluss und dem zweiten Fluidanschluss ist bei dem vorgegebenen maximalen Druckwert am zweiten Fluidanschluss durch eine Anschlagstellung des Dichtbereichs des Dichtelements im Dichtsitz des Ventilkörpers vollständig unterbrochen, und die Federkraft der Stellfeder bewegt den Steuerkolben aus der Anschlagstellung wieder in Richtung Ausgangsstellung, wenn am zweiten Fluidanschluss der aktuelle Druck unter den maximalen Druckwert abfällt.

In weiterer Ausgestaltung des erfindungsgemäßen Regelventils ist der erste Fluidanschluss beispielsweise als Hauptbremszylinderanschluss ausgeführt, welcher mit einem Hauptbremszylinder im Fahrzeugbremssystem gekoppelt ist, und der zweite Fluidanschluss ist beispielsweise als Pumpenanschluss ausgeführt, welcher mit einer Rückförderpumpe gekoppelt ist.

Ein erfindungsgemäßes Fahrzeugbremssystem mit den Merkmalen des Patentanspruchs 6 umfasst einen Hauptbremszylinder, eine Fluidsteuereinheit und mindestens eine Radbremse, wobei die Fluidsteuereinheit zur Bremsdruckmodulation der mindestens einen Radbremse in mindestens einem Bremskreis jeweils ein Umschaltventil, ein Ansaugventil und eine Rückförderpumpe umfasst. Das Ansaugventil des mindestens einen Bremskreises ist als erfindungsgemäßes oben beschriebenes Regelventil ausgeführt, welches jeweils in einer Saugleitung zwischen der korrespondierenden Rückförderpumpe und dem Hauptbremszylinder eingeschleift ist. Somit übernimmt das erfindungsgemäße Regelventil im Fahrzeugbremssystem in vorteilhafter Weise die Funktion des Ansaugventils und schützt die Rückfiihrungspumpe zusätzlich vor erhöhtem Vordruck auf der Saugseite. Durch die Begrenzung des wirksamen Drucks an der Saugseite der Rückförderpumpe kann Verschleiß, Reibung, Extrusion der Dichtungen in der Rückförderpumpe reduziert werden, wodurch in vorteilhafter Weise auch eine Leckage der Rückförderpumpe nach außen reduziert, der Wirkungsgrad erhöht und die Lebensdauer der Rückförderpumpe deutlich verlängert werden kann. Bei einer als Zahnradpumpe ausgeführten Rückförderpumpe wird außerdem ein teurer, komplexer und hochdruckbeständiger Wellendichtring vermieden und es kann eine kostengünstige Wellendichtung eingebaut werden.

Durch die in den abhängigen Ansprüchen aufgeführten Maßnahmen und Weiterbildungen sind vorteilhafte Verbesserungen des im Patentanspruch 6 angegebenen Fahrzeugbremssystems möglich.

Besonders vorteilhaft ist, dass der Steuerkolben des Regelventils während eines Saugbetriebs der Rückförderpumpe in der Ausgangstellung verbleibt, und während eines teilaktiven Zustands des Fahrzeugbremssystems vom Hauptbremszylinderanschluss mit einem Druck beaufschlagt ist, der den Steuerkolben gegen die Federkraft der Stellfeder in Richtung des druckentlasteten Anschlusses bewegt. Der Kolben unterbricht bei Erreichen des maximalen Druckwerts und der korrespondierenden Anschlagstellung, in welcher der Dichtbereich des mit dem Steuerkolben gekoppelten Dichtelements im Dichtsitz des Ventilkörpers abdichtet, die Fluidverbindung zwischen dem Hauptbremszylinderanschluss und dem Pumpenanschluss vollständig. Die Federkraft der Stellfeder bewegt den Steuerkolben aus der Anschlagstellung wieder in Richtung Ausgangsstellung, wenn der aktuelle Druck am Pumpenanschluss unter den maximalen Druckwert abfällt.

In vorteilhafter Ausgestaltung des erfindungsgemäßen Fahrzeugbremssystems verbleibt der Steuerkolben des Regelventils im drucklosen Zustand in der Ausgangstellung, und ist während eines ABS-Eingriffs vom Hauptbremszylinderanschluss mit einem Druck beaufschlagt, der den Steuerkolben gegen die Federkraft der Stellfeder in Richtung des druckentlasteten Anschlusses bewegt. Der Steuerkolben unterbricht bei Erreichen des maximalen Druckwerts und der korrespondierenden Anschlagstellung, in welcher der Dichtbereich des mit dem Steuerkolben gekoppelten Dichtelements im Dichtsitz des Ventilkörpers abdichtet, die Fluidverbindung zwischen dem Hauptbremszylinderanschluss und dem Pumpenanschluss vollständig, wobei die Fluidsteuereinheit in diesem Zustand eine ABS-Regelung ausführt.

Ausführungsbeispiele der Erfindung sind in den Zeichnungen dargestellt und werden in der nachfolgenden Beschreibung näher erläutert.

### Kurze Beschreibung der Zeichnungen

Fig. 1 zeigt ein schematisches Blockdiagramm eines herkömmlichen Fahrzeugbremssystems.
Fig. 2 und 3 zeigen jeweils eine schematische Schnittdarstellung eines Regelventils für das Fahrzeugbremssystems gemäß Fig. 1.
Fig. 4 zeigt ein schematisches Blockdiagramm eines Ausführungsbeispiels eines Fahrzeugbremssystems mit erfindungsgemäßen Regelventilen.
Fig. 5 und 6 zeigen jeweils eine schematische Schnittdarstellung eines Ausführungsbeispiels eines erfindungsgemäßen Regelventils für das Fahrzeugbremssystem gemäß Fig. 4.

### Ausführungsformen der Erfindung

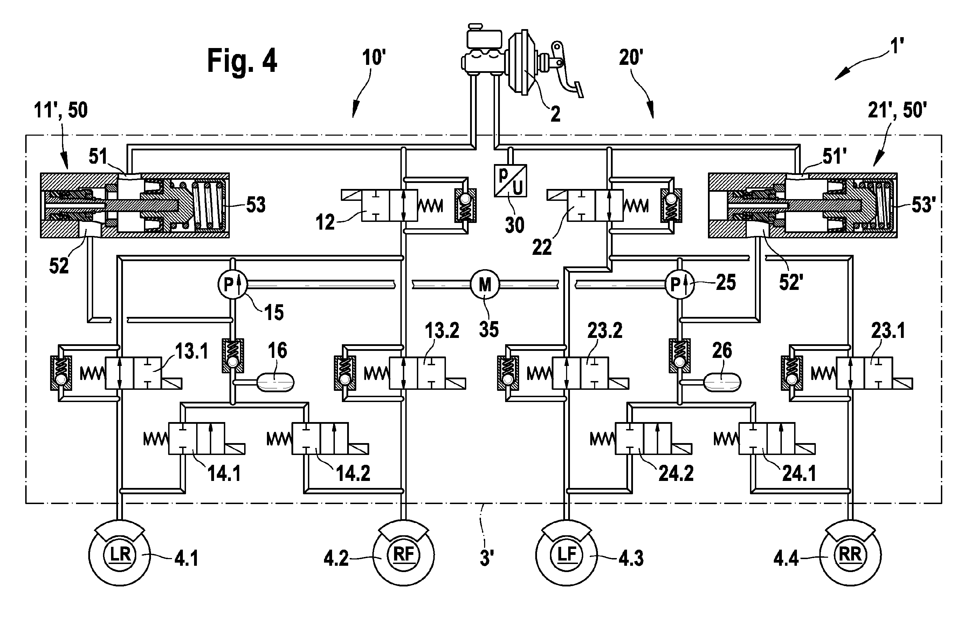

Das in Fig. 4 dargestellte Ausführungsbeispiel eines Fahrzeugbremssystems 1' ist im Wesentlichen gleich wie das herkömmliche Fahrzeugbremssystem 1 gemäß Fig. 1 aufgebaut und umfasst außer einem ersten Regelventil 50 und einem zweiten Regelventil 50' die gleichen Komponenten, welche gleiche bzw. analoge Funktionen ausführen. So umfasst das Ausführungsbeispiel des Fahrzeugbremssystems 1' einen Hauptbremszylinder 2, eine strichpunktiert dargestellte Fluidsteuereinheit 3' und vier Radbremsen 4.1, bis 4.4, die jeweils einen zugehörigen nicht dargestellten Radbremszylinder aufweisen. Jeweils zwei der vier Radbremsen 4.1 bis 4.4 sind einem Bremskreis 10', 20' zugeordnet, wobei jeder Bremskreis 10', 20' mit dem Hauptbremszylinder 2 verbunden ist. So sind eine erste Radbremse 4.1, die beispielsweise an einer Fahrzeughinterachse an der linken Seite angeordnet ist, und eine zweite Radbremse 4.2, die beispielsweise an einer Fahrzeugvorderachse an der rechten Seite angeordnet ist, einem ersten Bremskreis 10' zugeordnet, und eine dritte Radbremse 4.3, die beispielsweise an der Fahrzeugvorderachse an der rechten Seite angeordnet ist, und eine vierte Radbremse 4.4, die beispielsweise an einer Fahrzeughinterachse an der linken Seite angeordnet ist, sind einem zweiten Bremskreis 20' zugeordnet. Jeder Radbremse 4.1 bis 4.4 ist ein Einlassventil 13.1, 13.2, 23.1, 23.2 und ein Auslassventil 14.1, 14.2, 24.1, 24.2 zugeordnet, wobei über die Einlassventile 13.1, 13.2, 23.1, 23.2 jeweils Druck in der korrespondierenden Radbremse 4.1, bis 4.4 aufgebaut werden kann, und wobei über die Auslassventile 14.1, 14.2, 24.1, 24.2 jeweils Druck in der korrespondierenden Radbremse 4.1, bis 4.4 abgebaut werden kann.

Wie aus Fig. 4 weiter ersichtlich ist, ist der ersten Radbremse 4.1 ein erstes Einlassventil 13.1 und ein erstes Auslassventil 14.1 zugeordnet, der zweiten Radbremse 4.2 ist ein zweites Einlassventil 13.2 und ein zweites Auslassventil 14.2 zugeordnet. der dritten Radbremse 4.3 sind ein drittes Einlassventil 23.1 und ein drittes Auslassventil 24.2 zugeordnet und der vierten Radbremse 4.4 sind ein viertes Einlassventil 23.1 und ein viertes Auslassventil 24.1 zugeordnet. Zudem weist der erste Bremskreis 10' ein erstes Ansaugventil 11', ein erstes Umschaltventil 12, einen ersten Fluidspeicher 16 und eine erste Rückförderpumpe 15 auf. Der zweite Bremskreis 20' weist ein zweites Ansaugventil 21', ein zweites Umschaltventil 22, einen zweiten Fluidspeicher 26 und eine zweite Rückförderpumpe 25 auf. Die Rückförderpumpen 15, 25 der beiden Bremskreise 10', 20' können beispielsweise als Kolbenpumpen oder als Zahnradpumpen ausgeführt werden und werden im dargestellten Ausführungsbeispiel von einem gemeinsamen Elektromotor 35 angetrieben. Des Weiteren umfasst die Fluidsteuereinheit 3' zur Ermittlung des aktuellen Bremsdrucks eine Sensoreinheit 30. Die Fluidsteuereinheit 3' verwendet zur Bremsdruckmodulation im ersten Bremskreis 10' das erste Umschaltventil 12, das erste Ansaugventil 11' und die erste Rückförderpumpe 15 und zur Bremsdruckmodulation im zweiten Bremskreis 20' das zweite Umschaltventil 22, das zweite Ansaugventil 21' und die zweite Rückförderpumpe 25.

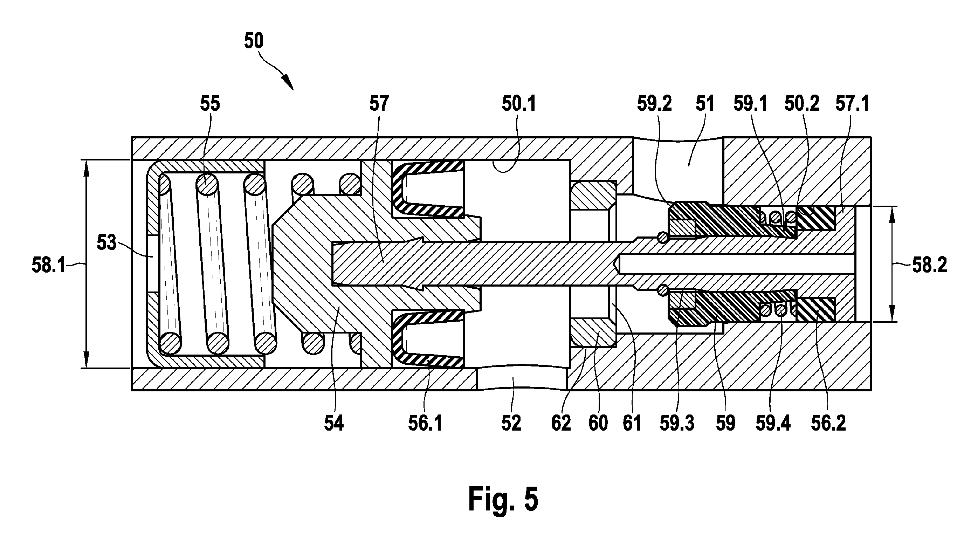

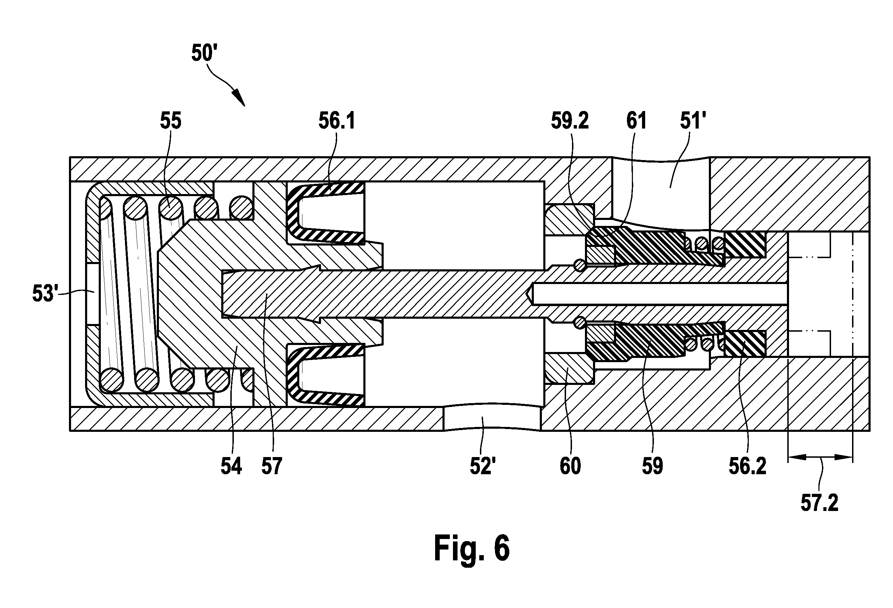

Die Ansaugventile 11', 21' sind als Regelventile 50, 50' ausgeführt, welche jeweils in einer Saugleitung zwischen der korrespondierenden Rückförderpumpe 15, 25 und dem Hauptbremszylinder 2 eingeschleift sind. Die Regelventile 50, 50' werden nachfolgende unter Bezugnahme auf Fig. 5 und 6 beschrieben. Im dargestellten Ausführungsbeispiel ist das erste Regelventil 50 in Fig. 4 und 5 im geöffneten Ausgangszustand während eines Saugbetriebs der ersten Rückförderpumpe 15 dargestellt, und das zweite Regelventil 50' ist in Fig. 4 und 6 im geschlossenen Zustand dargestellt.

Wie aus Fig. 5 und. 6 ersichtlich ist, weisen die Regelventile 50, 50' jeweils einen Hauptbremszylinderanschluss 51, 51', einen Pumpenanschluss 52, 52' und einen druckentlasteten Anschluss 53, 53' zur Atmosphäre auf. Zudem umfassen die Regelventile 50, 50' jeweils einen Ventilkörper 60 mit einem Dichtsitz 61 und ein mit einem Steuerkolben 54 gekoppeltes Dichtelement 59. Ein Dichtbereich 59.2 des Dichtelements 59 wirkt mit dem Dichtsitz 61 des Ventilkörpers 60 zusammen, um einen wirksamen Druck am Pumpenanschluss 52, 52' auf einen vorgebbaren maximalen Druckwert zu begrenzen. Im dargestellten Ausführungsbeispiel ist der Ventilkörper 60 an einem Verstemmbereich 62 mit einer Ventilwand dicht verstemmt, und ein wirksamer Durchmesser 58.1 des Steuerkolbens 54 ist größer als ein wirksamer Durchmesser 58.2 des Dichtelements 59 ausgeführt. Dies ermöglicht in vorteilhafter Weise eine Verbesserung der Regelgüte bzw. eine Verringerung des Steuerdrucks zur Betätigung des Regelventils. Der längsbewegliche Steuerkolben 54 ist an der druckentlasteten Seite von einer Stellfeder 55 mit einer Federkraft beaufschlagt und gibt in der in Fig. 5 dargestellten Ausgangstellung eine Fluidverbindung zwischen dem Hauptbremszylinderanschluss 51 und dem Pumpenanschluss 52 vollständig frei.

Wie aus Fig. 5 und 6 weiter ersichtlich ist, ist der Steuerkolben 54 durch einen Stift 57 mit dem Dichtelement 59 gekoppelt, wobei der Steuerkolben 54 und das Dichtelement 59 auf verschiedenen Seiten des Ventilkörpers 60 angeordnet sind, d.h. der Steuerkolben 54 ist im dargestellten Ausführungsbeispiel links vom Ventilkörper 60 angeordnet, und das Dichtelement 59 ist im dargestellten Ausführungsbeispiel rechts vom Ventilkörper 60 angeordnet. Der Stift 57 ist zur Kopplung des Steuerkolbens 54 mit dem Dichtelement 59 durch eine Durchflussöffnung des Ventilkörpers 60 geführt. Das Dichtelement 59 ist auf den Stift 57 aufgesteckt und ist am hinteren Bereich über eine beispielsweise aus Kunststoff gefertigte Dichtlippe 59.1 am Stift 57 abgedichtet. Am vorderen Bereich weist das Dichtelement 59 einen radialen Bewegungsspielraum 59.3 zum Stift 57 auf, um Fertigungstoleranzen auszugleichen und ein sicheres Schließen des Regelventils zu gewährleisten. Im dargestellten Ausführungsbeispiel ist der Stift 57 an einem Ende über Rastnasen in einer Sackbohrung im Steuerkolben 54 eingerastet und so fest mit dem Steuerkolben 54 verbunden, welcher über einen ersten Dichtring 56.1 gegen eine erste Ventilwand 50.1 abgedichtet ist. Alternativ kann der Stift 57 an einem Ende in die Sackbohrung im Steuerkolben 54 eingepresst und so fest mit dem Steuerkolben 54 verbunden werden. Am anderen Ende weist der Stift 57 einen Bund 57.1 auf, an welchem ein zweiter Dichtring 56.2 anliegt, welcher über ein sich am Dichtelement 59 abstützendes Federelement 59.4 axial vorgespannt ist und den Stift 57 gegen eine zweite Ventilwand 50.2 abdichtet.

Während eines ABS-Eingriffs wird der erste Durchmesser 58.1 des Steuerkolbens 54 von Seiten des Hauptbremszylinderanschlusses 51, 51' mit einem Druck von ungefähr 2 bar beaufschlagt, der den Steuerkolben 54 gegen die Federkraft der Stellfeder 55 in Richtung des druckentlasteten Anschlusses 53, 53' bewegt und zieht dabei über den Stift 57 das Dichtelement 59 mit dem zweiten Durchmesser 58.2 mit, bis der als Dichtkegel ausgeführte Dichtbereich 59.2 des Dichtelements 59 in einer in Fig. 6 dargestellten Anschlagstellung am Dichtsitz 61 des Ventilkörpers 60 anliegt. Bei Erreichen des maximalen Druckwerts von ungefähr 2 bar und der korrespondierenden Anschlagstellung, die in Fig. 6 dargestellt ist, dichtet der als Dichtkegel ausführte Dichtbereich 59.2 des Dichtelements 59 im Dichtsitz 61 des Ventilkörpers 60 ab, und die Fluidverbindung zwischen dem Hauptbremszylinderanschluss 51' und dem Pumpenanschluss 52' wird vollständig unterbrochen, wobei die Fluidsteuereinheit 3' in diesem Zustand eine ABS-Regelung ausführt. Da der Durchmesser des Dichtbereichs 59.2 und der Durchmesser des Dichtsitzes 61 gleich groß ausgelegt werden können, kann nach dem Schließen des Regelventils 50, 50' ein höherer Druck des Hauptbremszylinders 2 gehalten werden, ohne dass der hohe Druck bis zum Eingang der Rückförderpumpe 25 gelangt.

Während eines teilaktiven Zustands des Fahrzeugbremssystems 1' wird der Kolben 54 des Regelventils 50 von Seiten des Hauptbremszylinderanschlusses 51 mit einem Druck beaufschlagt, der den Kolben 54 gegen die Federkraft der Stellfeder 55 in Richtung des druckentlasteten Anschlusses 53 bewegt, wobei die Fluidverbindung zwischen dem Hauptbremszylinderanschluss 51 und dem Pumpenanschluss 52 durch die korrespondierende Bewegung des Dichtelements 59 reduziert wird. Bei Erreichen des maximalen Druckwerts befindet sich der Kolben 54 in der korrespondierenden Anschlagstellung, die in Fig. 6 dargestellt ist, in welcher die Verbindung zwischen dem Hauptbremszylinderanschluss 51' und dem Pumpenanschluss 52' durch das Dichtelement 59 vollständig unterbrochen ist. Damit ist sichergestellt, dass sich der Druck in der Leitung zum Hauptbremszylinder 2 aufbauen kann, ohne den Druck in der Saugseite der Rückförderpumpe 25 über den vorgegebenen maximalen Druckwert ansteigen zu lassen. Wird der aktuelle Druck am Pumpenanschluss 52' reduziert, indem beispielsweise die Rückförderpumpe 25 saugt, dann bewegt die Federkraft der Stellfeder 55 den Kolben 54 aus der Anschlagstellung in Richtung Ausgangsstellung, wodurch die Verbindung zwischen dem Hauptbremszylinderanschluss 51, 51' und dem Pumpenanschluss 52, 52' wieder freigegeben wird, bis durch eine Betätigung des Hauptbremszylinders 2 der Druck von ungefähr 2 bar erreicht wird. Die Rückförderpumpe 15, 25 weist somit immer einen Vordruck auf, bleibt aber gegen den hohen Druck des Hauptbremszylinders 2 geschützt. Im ESP-Fall bleibt das Regelventil 50 offen und das Bremsfluid kann ungehindert von der Rückförderpumpe 15 angesaugt werden. In Fig. 6 bezeichnet das Bezugszeichen 57.2 den maximalen Hub des Dichtelements 59.

Das erfindungsgemäße Regelventil ermöglicht dadurch, dass der Durchmesser des Steuerkolbens größer oder gleich als der Durchmesser des Dichtelements ausgeführt ist, dass die Regelgüte verbessert bzw. der Steuerdruck zur Betätigung des Regelventils reduziert werden kann. Zudem kann das erfindungsgemäße Regelventil im Fahrzeugbremssystem die Aufgabe des Ansaugventils übernehmen und kann zusätzlich die Rückförderpumpe vor erhöhtem Vordruck auf der Saugseite schützen.

## Patentansprüche

1. Regelventil für ein Fahrzeugbremssystem mit einem ersten Fluidanschluss (51, 51'), einem zweiten Fluidanschluss (52, 52') und einem druckentlasteten Anschluss (53, 53') zur Atmosphäre, wobei ein längsbeweglicher Steuerkolben (54) an der druckentlasteten Seite von einer Stellfeder (55) mit einer Federkraft beaufschlagt ist und in einer Ausgangstellung eine Fluidverbindung zwischen dem ersten Fluidanschluss (51, 51') und dem zweiten Fluidanschluss (52, 52') vollständig freigibt, wobei ein Ventilkörper (60) mit einem Dichtsitz (61) und ein mit dem Steuerkolben (54) gekoppeltes Dichtelement (59) vorgesehen sind, wobei ein vorderes Dichtbereich (59.2) des Dichtelements (59) mit dem Dichtsitz (61) des Ventilkörpers (60) zusammenwirkt, um einen wirksamen Druck am zweiten Fluidanschluss (52, 52') auf einen vorgebbaren maximalen Druckwert zu begrenzen, wobei ein wirksamer Durchmesser (58.1) des Steuerkolbens (54) größer oder gleich als ein wirksamen Durchmesser (58.2) des Dichtelements (59) ausgeführt ist, wobei der Steuerkolben (54) durch einen Stift (57) mit dem Dichtelement (59) gekoppelt ist, und wobei der Steuerkolben (54) und das Dichtelement (59) auf verschiedenen Seiten des Ventilkörpers (60) angeordnet sind, und der Stift (57) durch eine Durchflussöffnung des Ventilkörpers (60) geführt ist, **dadurch gekennzeichnet, dass** das Dichtelement (59) am vorderen Dichtbereich (59.2) einen radialen Bewegungsspielraum (59.3) zum Stift (57) aufweist.

2. Regelventil nach Anspruch 1, **dadurch gekennzeichnet, dass** das Dichtelement (59) auf den Stift (57) aufgesteckt und am hinteren Bereich über eine Dichtlippe (59.1) am Stift (57) abgedichtet ist.

3. Regelventil nach Anspruch 1 oder 2, **dadurch gekennzeichnet, dass** der Stift (57) an einem Ende mit dem Steuerkolben (54) verbunden ist, welcher über eine erste Dichtung (56.1) gegen eine erste Ventilwand (50.1) abgedichtet ist, und am anderen Ende einen Bund (57.1) aufweist, an welchem eine zweite Dichtung (56.2) anliegt, welche über ein sich am Dichtelement (59) abstützendes Federelement (59.4) axial vorgespannt ist und den Stift (57) gegen eine zweite Ventilwand (50.2) abdichtet.

4. Regelventil nach einem der Ansprüche 1 bis 3, **dadurch gekennzeichnet, dass** ein sich am ersten Fluidanschluss (51, 51') aufbauender Druck den Steuerkolben (54) gegen die Federkraft der Stellfeder (55) in Richtung des druckentlasteten Anschlusses (53, 53') bewegt, wobei die Fluidverbindung zwischen dem ersten Fluidanschluss (51, 51') und dem zweiten Fluidanschluss (52, 52') durch die Bewegung des mit dem Steuerkolben (57) gekoppelten Dichtelements (59) reduzierbar ist, wobei die Fluidverbindung zwischen dem ersten Fluidanschluss (51, 51') und dem zweiten Fluidanschluss (52, 52') bei dem vorgegebenen maximalen Druckwert am zweiten Fluidanschluss (52, 52') durch eine Anschlagstellung des Dichtbereichs (59.2) des Dichtelements (59) im Dichtsitz (61) des Ventilkörpers (60) vollständig unterbrochen ist, und wobei die Federkraft der Stellfeder (55) den Steuerkolben (54) aus der Anschlagstellung wieder in Richtung Ausgangsstellung bewegt, wenn am zweiten Fluidanschluss (52, 52') der aktuelle Druck unter den maximalen Druckwert abfällt.

5. Regelventil nach einem der Ansprüche 1 bis 4, **dadurch gekennzeichnet, dass** der erste Fluidanschluss als Hauptbremszylinderanschluss (51, 51') ausgeführt ist, welcher mit einem Hauptbremszylinder (2) im Fahrzeugbremssystem (1') koppelbar ist, und der zweite Fluidanschluss als Pumpenanschluss (52, 52') ausgeführt ist, welcher mit einer Rückförderpumpe (15, 25) koppelbar ist.

6. Fahrzeugbremssystem mit einem Hauptbremszylinder (2), einer Fluidsteuereinheit (3') und mindestens einer Radbremse (4.1, bis 4.4), wobei die Fluidsteuereinheit (3') zur Bremsdruckmodulation der mindestens einen Radbremse (4.1 bis 4.4) in mindestens einem Bremskreis (10', 20') jeweils ein Umschaltventil (12, 22), ein Ansaugventil (11', 21') und eine Rückförderpumpe (15, 25) umfasst, **dadurch gekennzeichnet, dass** das Ansaugventil (11', 21') als Regelventil (50, 50') nach einem der Ansprüche 1 bis 5 ausgeführt ist, welches jeweils in einer Saugleitung zwischen der korrespondierenden Rückförderpumpe (15, 25) und dem Hauptbremszylinder (2) eingeschleift ist.

7. Bremssystem nach Anspruch 6, **dadurch gekennzeichnet, dass** der Steuerkolben (54) des Regelventils (50, 50') während eines Saugbetriebs der Rückförderpumpe (15, 25) in der Ausgangstellung verbleibt, und während eines teilaktiven Zustands des Bremssystems vom Hauptbremszylinderanschluss (51, 51') mit einem Druck beaufschlagt ist, der den Steuerkolben (54) gegen die Federkraft der Stellfeder (55) in Richtung des druckentlasteten Anschlusses (53) bewegt, wobei der Kolben (54) bei Erreichen des maximalen Druckwerts und der korrespondierenden Anschlagstellung, in welcher der Dichtbereich (59.2) des mit dem Steuerkolben (54) gekoppelten Dichtelements (59) im Dichtsitz (61) des Ventilkörpers (60) abdichtet, die Fluidverbindung zwischen dem Hauptbremszylinderanschluss (51, 51') und dem Pumpenanschluss (52, 52') vollständig unterbricht, und wobei die Federkraft der Stellfeder (55) den Steuerkolben (54) aus der Anschlagstellung in Richtung Ausgangsstellung bewegt, wenn der aktuelle Druck am Pumpenanschluss (52, 52') unter den maximalen Druckwert abfällt.

8. Bremssystem nach Anspruch 6 oder 7, **dadurch gekennzeichnet, dass** der Steuerkolben (54) des Regelventils (50, 50') im drucklosen Zustand in der Ausgangstellung verbleibt, und während eines ABS-Eingriffs vom Hauptbremszylinderanschluss (51, 51') mit einem Druck beaufschlagt ist, der den Steuerkolben (54) gegen die Federkraft der Stellfeder (55) in Richtung des druckentlasteten Anschlusses (53, 53') bewegt, wobei der Steuerkolben (54) bei Erreichen des maximalen Druckwerts und der korrespondierenden Anschlagstellung, in welcher der Dichtbereich (59.2) des mit dem Steuerkolben (54) gekoppelten Dichtelements (59) im Dichtsitz (61) des Ventilkörpers (60) abdichtet, die Fluidverbindung zwischen dem Hauptbremszylinderanschluss (51, 51') und dem Pumpenanschluss (52, 52') vollständig unterbricht, wobei die Fluidsteuereinheit (3') in diesem Zustand eine ABS-Regelung ausführt.

## Claims

1. Control valve for a vehicle brake system having a first fluid connector (51, 51'), a second fluid connector (52, 52') and a pressure-relieved connector (53, 53') to atmosphere, a longitudinally movable control piston (54) being loaded on the pressure-relieved side with a spring force by an actuating spring (55) and, in a starting position, completely opening a fluid connection between the first fluid connector (51, 51') and the second fluid connector (52, 52'), a valve body (60) with a sealing seat (61) and a sealing element (59) which is coupled to the control piston (54) being provided, a front sealing region (59.2) of the sealing element (59) interacting with the sealing seat (61) of the valve body (60), in order to limit an effective pressure at the second fluid connector (52, 52') to a predefinable maximum pressure value, an effective diameter (58.1) of the control piston (54) being configured so as to be greater than or equal to an effective diameter (58.2) of the sealing element (59), the control piston (54) being coupled by way of a pin (57) to the sealing element (59), and the control piston (54) and the sealing element (59) being arranged on different sides of the valve body (60), and the pin (57) being guided through a throughflow opening of the valve body (60), **characterized in that** the sealing element (59) has a radial movement play space (59.3) with respect to the pin (57) at the front sealing region (59.2).

2. Control valve according to Claim 1, **characterized in that** the sealing element (59) is plugged onto the pin (57) and is sealed via a sealing lip (59.1) on the pin (57) at the rear region.

3. Control valve according to Claim 1 or 2, **characterized in that** the pin (57) is connected at one end to the control piston (54), which is sealed with respect to a first valve wall (50.1) via a first seal (56.1), and, at the other end, has a collar (57.1), against which a second seal (56.2) bears which is prestressed axially via a spring element (59.4), which is supported on the sealing element (59), and seals the pin (57) with respect to a second valve wall (50.2).

4. Control valve according to one of Claims 1 to 3, **characterized in that** a pressure which is built up at the first fluid connector (51, 51') moves the control piston (54) counter to the spring force of the actuating spring (55) in the direction of the pressure-relieved connector (53, 53'), it being possible for the fluid connection between the first fluid connector (51, 51') and the second fluid connector (52, 52') to be reduced by way of the movement of the sealing element (59) which is coupled to the control piston (57), the fluid connection between the first fluid connector (51, 51') and the second fluid connector (52, 52') being completely interrupted at the predefined maximum pressure value at the second fluid connector (52, 52') by way of a stop position of the sealing region (59.2) of the sealing element (59) in the sealing seat (61) of the valve body (60), and the spring force of the actuating spring (55) moving the control piston (54) from the stop position in the direction of the starting position again when the current pressure falls below the maximum pressure value at the second fluid connector (52, 52').

5. Control valve according to one of Claims 1 to 4, **characterized in that** the first fluid connector is configured as a brake master cylinder connector (51, 51') which can be coupled to a brake master cylinder (2) in the vehicle brake system (1'), and the second fluid connector is configured as a pump connector (52, 52') which can be coupled to a recirculating pump (15, 25).

6. Vehicle brake system having a brake master cylinder (2), a fluid control unit (3') and at least one wheel brake (4.1 to 4.4), the fluid control unit (3') for brake pressure modulation of the at least one wheel brake (4.1 to 4.4) in at least one brake circuit (10', 20') comprising in each case one switchover valve (12, 22), an intake valve (11', 21') and a recirculating pump (15, 25), **characterized in that** the intake valve (11', 21') is configured as a control valve (50, 50') according to one of Claims 1 to 5 which is ground in each case into a suction line between the corresponding recirculating pump (15, 25) and the brake master cylinder (2).

7. Brake system according to Claim 6, **characterized in that** the control piston (54) of the control valve (50, 50') remains in the starting position during suction operation of the recirculating pump (15, 25), and is loaded with a pressure by the brake master cylinder connector (51, 51') during a partially active state of the brake system, which pressure moves the control piston (54) counter to the spring force of the actuating spring (55) in the direction of the pressure-relieved connector (53), the piston (54) completely interrupting the fluid connection between the brake master cylinder connector (51, 51') and the pump connector (52, 52') upon reaching of the maximum pressure value and the corresponding stop position, in which the sealing region (59.2) of the sealing element (59) which is coupled to the control piston (54) seals in the sealing seat (61) of the valve body (60), and the spring force of the actuating spring (55) moving the control piston (54) out of the stop position in the direction of the starting position when the current pressure at the pump connector (52, 52') falls below the maximum pressure value.

8. Brake system according to Claim 6 or 7, **characterized in that** the control piston (54) of the control valve (50, 50') remains in the pressureless state in the starting position and, during an ABS intervention, is loaded by the brake master cylinder connector (51, 51') with a pressure which moves the control piston (54) counter to the spring force of the actuating spring (55) in the direction of the pressure-relieved connector (53, 53'), the control piston (54) completely interrupting the fluid connection between the brake master cylinder connector (51, 51') and the pump connector (52, 52') upon reaching of the maximum pressure value and the corresponding stop position, in which the sealing region (59.2) of the sealing element (59) which is coupled to the control piston (54) seals in the sealing seat (61) of the valve body (60), the fluid control unit (3') performing an ABS control operation in this state.

## Revendications

1. Soupape de régulation pour un système de freinage de véhicule comprenant un premier raccord de fluide (51, 51'), un deuxième raccord de fluide (52, 52') et un raccord (53, 53') détendu en pression vers l'atmosphère, un piston de commande (54) déplaçable longitudinalement étant sollicité, au niveau du côté détendu en pression, par une force de ressort d'un ressort de réglage (55) et, dans une position de départ, libérant entièrement une liaison fluidique entre le premier raccord de fluide (51, 51') et le deuxième raccord de fluide (52, 52'), un corps de soupape (60) pourvu d'un siège d'étanchéité (61) et un élément d'étanchéité (59) accouplé au piston de commande (54) étant prévus, une zone d'étanchéité avant (59.2) de l'élément d'étanchéité (59) coopérant avec le siège d'étanchéité (61) du corps de soupape (60), afin de limiter une pression effective au niveau du deuxième raccord de fluide (52, 52') à une valeur de pression maximale pouvant être prédéfinie, un diamètre effectif (58.1) du piston de commande (54) étant réalisé plus grand que, ou égal à, un diamètre effectif (58.2) de l'élément d'étanchéité (59), le piston de commande (54) étant accouplé à l'élément d'étanchéité (59) au moyen d'une goupille (57), et le piston de commande (54) et l'élément d'étanchéité (59) étant disposés sur des côtés différents du corps de soupape (60), et la goupille (57) étant guidée à travers une ouverture de passage du corps de soupape (60), **caractérisée en ce que** l'élément d'étanchéité (59) présente, sur la zone d'étanchéité avant (59.2), un jeu de déplacement radial (59.3) par rapport à la goupille (57).

2. Soupape de régulation selon la revendication 1, **caractérisée en ce que** l'élément d'étanchéité (59) est enfoncé sur la goupille (57) et, au niveau de la zone arrière, réalise l'étanchéité sur la goupille (57) par le biais d'une lèvre d'étanchéité (59.1).

3. Soupape de régulation selon la revendication 1 ou 2, **caractérisée en ce que** la goupille (57) est reliée au piston de commande (54) à une extrémité, lequel piston de commande réalise l'étanchéité contre une première paroi de soupape (50.1) par le biais d'un premier joint d'étanchéité (56.1), et présente, à l'autre extrémité, un épaulement (57.1) contre lequel s'applique un deuxième élément d'étanchéité (56.2) qui est précontraint axialement par le biais d'un élément ressort (59.4) s'appuyant contre l'élément d'étanchéité (59) et réalise l'étanchéité de la goupille (57) contre une deuxième paroi de soupape (50.2).

4. Soupape de régulation selon l'une quelconque des revendications 1 à 3, **caractérisée en ce qu'**une pression augmentant au niveau du premier raccord de fluide (51, 51') déplace le piston de commande (54) à l'encontre de la force de ressort du ressort de réglage (55) en direction du raccord détendu en pression (53, 53'), la liaison fluidique entre le premier raccord de fluide (51, 51') et le deuxième raccord de fluide (52, 52') pouvant être réduite par le déplacement de l'élément d'étanchéité (59) accouplé au piston de commande (57), la liaison fluidique entre le premier raccord de fluide (51, 51') et le deuxième raccord de fluide (52, 52') étant, en cas de valeur de pression maximale prédéfinie au niveau du deuxième raccord de fluide (52, 52'), entièrement interrompue par une position de butée de la zone d'étanchéité (59.2) de l'élément d'étanchéité (59) dans le siège d'étanchéité (61) du corps de soupape (60), et la force de ressort du ressort de réglage (55) déplaçant le piston de commande (54) hors de la position de butée à nouveau en direction de la position de départ lorsque la pression instantanée au niveau du deuxième raccord de fluide (52, 52') descend en dessous de la valeur de pression maximale.

5. Soupape de régulation selon l'une quelconque des revendications 1 à 4, **caractérisée en ce que** le premier raccord de fluide est réalisé sous forme de raccord de maître-cylindre de frein (51, 51'), lequel peut être accouplé avec un maître-cylindre de frein (2) dans le système de freinage de véhicule (1'), et le deuxième raccord de fluide est réalisé sous forme de raccord de pompe (52, 52') qui peut être accouplé avec une pompe de retour (15, 25).

6. Système de freinage de véhicule comprenant un maître-cylindre de frein (2), une unité de commande de fluide (3') et au moins un frein de roue (4.1 à 4.4), l'unité de commande de fluide (3') comportant, pour la modulation de la pression de freinage de l'au moins un frein de roue (4.1 à 4.4) dans au moins un circuit de freinage (10', 20'), respectivement une soupape d'inversion (12, 22), une soupape d'aspiration (11', 21') et une pompe de retour (15, 25), **caractérisé en ce que** la soupape d'aspiration (11', 21') est réalisée sous forme de soupape de régulation (50, 50') selon l'une quelconque des revendications 1 à 5, laquelle est respectivement insérée dans une conduite d'aspiration entre la pompe de retour (15, 25) correspondante et le maître-cylindre de frein (2).

7. Système de freinage selon la revendication 6, **caractérisé en ce que** le piston de commande (54) de la soupape de régulation (50, 50') demeure dans la position de départ pendant le fonctionnement d'aspiration de la pompe de retour (15, 25) et est, pendant un état partiellement actif du système de freinage, sollicité par le raccord de maître-cylindre de frein (51, 51') avec une pression qui déplace le piston de commande (54) à l'encontre de la force de ressort du ressort de réglage (55) en direction du raccord (53) détendu en pression, le piston (54), à l'obtention de la valeur de pression maximale et de la position de butée correspondante, dans laquelle la zone d'étanchéité (59.2) de l'élément d'étanchéité (59) accouplé au piston de commande (54) réalise l'étanchéité dans le siège d'étanchéité (61) du corps de soupape (60), interrompant entièrement la liaison fluidique entre le raccord de maître-cylindre de frein (51, 51') et le raccord de pompe (52, 52'), et la force de ressort du ressort de réglage (55) déplaçant le piston de commande (54) hors de la position de butée en direction de la position de départ lorsque la pression instantanée au niveau du raccord de pompe (52, 52') descend en dessous de la valeur de pression maximale.

8. Système de freinage selon la revendication 6 ou 7, **caractérisé en ce que** le piston de commande (54) de la soupape de régulation (50, 50') demeure dans la position de départ dans l'état non sollicité en pression, et pendant un engagement d'ABS par le raccord de maître-cylindre de frein (51, 51'), est sollicité avec une pression qui déplace le piston de commande (54) à l'encontre de la force de ressort du ressort de réglage (55) en direction du raccord détendu en pression (53, 53'), le piston de commande (54), à l'obtention de la valeur de pression maximale et de la position de butée correspondante, dans laquelle la zone d'étanchéité (59.2) de l'élément d'étanchéité (59) accouplé au piston de commande (54) réalise l'étanchéité dans le siège d'étanchéité (61) du corps de soupape (60), interrompant entièrement la liaison fluidique entre le raccord de maître-cylindre de frein (51, 51') et le raccord de pompe (52, 52'), l'unité de commande de fluide (3') effectuant dans cet état une régulation d'ABS.
